# FASCICULE DE BREVET EUROPEEN

(11) **EP 4 387 043 B1**
(45) Date de publication et mention de la délivrance du brevet: **20.08.2025**
(21) Numéro de dépôt: 23215102.7
(22) Date de dépôt: 07.12.2023
(51) Int. Cl.: H02J 7/35

(54) **REMPLACEMENT DE BATTERIES AU PLOMB PAR DES BATTERIES AU LITHIUM**
ERSATZ VON BLEIBATTERIEN DURCH LITHIUMBATTERIEN
REPLACEMENT OF LEAD BATTERIES WITH LITHIUM BATTERIES

(30) Priorité: 15.12.2022 FR 2213471
(43) Date de publication de la demande: 19.06.2024
(73) Titulaire: SAGEMCOM ENERGY & TELECOM SAS, 92270 Bois-Colombes (FR)
(72) Inventeur: ALNEJAILI, Tareq, 92270 BOIS-COLOMBES (FR)
(74) Mandataire: Cabinet Boettcher

(56) Documents cités:
- EP-A1- 2 584 667
- US-A1- 2014 361 725

## Description

L'invention concerne le domaine des dispositifs d'alimentation qui sont connectés à des panneaux photovoltaïques et qui sont agencés pour alimenter des systèmes clients (tels que des tours de télécommunication).

### ARRIERE PLAN DE L'INVENTION

Dans les zones rurales, les tours de télécommunication jouent un rôle très important pour connecter des millions de personnes aux infrastructures civiles et pour accéder aux services numériques, et notamment aux services de santé et d'éducation.

Habituellement, ces tours de télécommunication sont alimentées par un ou plusieurs générateurs diesel (DG). Néanmoins, les DGs présentent une série d'inconvénients pour l'environnement. Ils produisent en effet du dioxyde de carbone, de l'oxyde d'azote, des particules et d'autres gaz d'échappement dangereux qui se dégagent dans l'atmosphère.

La consommation d'1 L de gazole émet en moyenne 2,7 kg de CO2. Par rapport à d'autres sources d'énergie, les DGs sont donc une source de pollution très importante. De plus, l'entretien et les coûts de carburant peuvent augmenter considérablement les coûts d'exploitation des DGs.

On a donc conçu pour alimenter les tours de télécommunication une solution d'alimentation basée sur l'utilisation de l'énergie solaire comme source d'énergie principale, et d'un banc de batteries comme source d'énergie secondaire. Une telle solution d'alimentation, particulièrement adaptée aux pays dont le taux d'ensoleillement est important, peut fortement améliorer l'impact environnemental du système énergétique et réduire les coûts d'exploitation du système.

Les batteries utilisées comme source d'énergie secondaire sont classiquement des batteries au plomb (plomb-acide). Les batteries sont utilisées pendant la nuit et les périodes de mauvais temps.

Cependant, ces batteries au plomb présentent un certain nombre d'inconvénients, parmi lesquels :
- la profondeur de décharge : le DOD (pour *Depth Of Discharge*) des batteries au plomb ne doit pas dépasser 50 %. Au-delà de ce point, la durée de vie de la batterie peut être affectée ;
- le cycle de vie : les batteries au plomb ont un faible cycle de vie qui varie entre 100 et 300 cycles de charge/décharge ;
- l'efficacité : les batteries au plomb ont une efficacité réduite de 80 à 85 % ;
- la densité énergétique : les batteries au plomb ont une faible densité énergétique.

Cette solution d'alimentation n'est donc pas parfaitement satisfaisante.

Il a donc été décidé de remplacer les batteries au plomb par des batteries au lithium, et par exemple par des batteries lithium-ion, notamment de type Lithium Fer Phosphate (LiFePO4). En effet, ces batteries présentent un DOD élevé (jusqu'à 95%), un bon cycle de vie (1500 cycles de charge/décharge typiquement), un rendement élevé (jusqu'à 95%) et une bonne densité énergétique. De plus, ces batteries ne nécessitent aucun entretien ni ventilation, contrairement aux batteries au plomb.

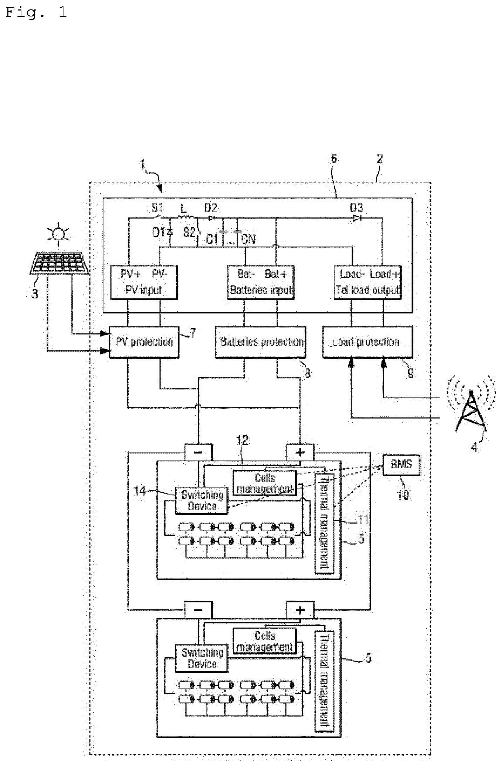

On obtient donc un dispositif d'alimentation semblable à celui de la figure 1.

Le dispositif d'alimentation 1 est intégré dans une armoire 2 qui est connectée, d'une part, à des panneaux photovoltaïques 3, et d'autre part, à une tour de télécommunication 4. C'est donc cette armoire 2 qui fournit l'énergie électrique à la tour de télécommunication 4 pour son alimentation.

Le dispositif d'alimentation 1 comprend donc des batteries 5, par exemple de type LiFePO4, ainsi qu'un régulateur de charge solaire 6, par exemple de type MPPT (pour *Maximum Power Point Tracking*). Le dispositif d'alimentation 1 comprend aussi des premiers composants de protection 7 visant à protéger le régulateur 6 contre une surtension ou un pic de courant provenant des panneaux photovoltaïques 3, des deuxièmes composants de protection 8 visant à protéger les batteries 5, et des troisième composants de protection 9 visant à protéger la tour de télécommunication 4 contre une surtension ou un pic de courant provenant du dispositif d'alimentation 1.

Les batteries au lithium 5 sont classiquement équipées d'un système de gestion de batterie 10 (BMS, pour *Battery Management System).*

Le BMS 10 est un système électronique responsable de la surveillance, de l'équilibrage, de la coordination et du contrôle des cellules de batterie Lithium-ion. Le BMS 10 gère le contrôle en temps réel de chaque cellule de la batterie 5, communique avec les appareils externes, gère le calcul du SOC (pour *State Of Charge*)*,* mesure la température et la tension, etc. Pour chaque batterie 5, le BMS 10 comprend ici un module de gestion thermique 11, un module de gestion des cellules 12, et un module de commutation 14 comprenant des MOSFETs de commutation.

Il protège la batterie 5 de différents défauts tels que la surtension, la surintensité, la sous-tension, la surchauffe, etc.

En cas d'événement indésirable (sous-tension, surtension, etc...), le BMS 10 peut isoler et déconnecter les cellules de la batterie 5 à l'aide des transistors MOSFETs, qui sont considérés comme des interfaces entre les cellules de la batterie 5 et les bornes externes négative et positive de la batterie 5.

Si les MOSFETs de commutation de la batterie 5 sont déconnectés sous n'importe quel événement, une tension doit être appliquée aux bornes de sortie de la batterie 5 pour la réactiver.

Cependant, on a détecté deux problèmes majeurs lors du remplacement des batteries au plomb par des batteries au lithium (notamment LiFePO4).

Le premier problème concerne la mise en service du dispositif d'alimentation 1 suite à l'installation des nouvelles batteries LiFePO4. Lors de la première installation, un courant d'appel élevé est demandé par le régulateur de charge 6 pour charger ses condensateurs de sortie C1...CN. Ce courant de crête risque d'endommager le circuit de protection du BMS 10 de chaque batterie 5, ce qui a pour conséquence d'endommager la batterie 5 qui doit alors être remplacée.

Le deuxième problème concerne le fonctionnement courant du dispositif d'alimentation 1. Si l'une des batteries 5 est complètement déchargée, le BMS 10 la déconnecte et l'isole du reste du dispositif 1. Pour reconnecter la batterie 5, une tension doit être appliquée à son entrée. En l'absence d'une telle tension, le dispositif d'alimentation 1 n'est pas fonctionnel et doit être démarré manuellement pour éviter un *blackout* d'énergie.

Pour résoudre le premier et le deuxième problème, un technicien doit intervenir sur le site en étant muni d'un petit générateur diesel. Cette solution est très compliquée à mettre en œuvre car, dans la plupart des cas, les tours de télécommunication et leur système d'alimentation sont situés dans des zones reculées avec un accès très difficile. Le service de télécommunication est donc interrompu pendant une longue période. Un document brevet de l'état de 1a technique divulgue un système destiné à démarrer 1e contrôleur d'une batterie alimentée par un panneau solaire : EP 2 584 667.

### OBJET DE L'INVENTION

L'invention a pour objet, lors du remplacement des batteries au plomb par des batteries au lithium dans un dispositif d'alimentation tel que précédemment décrit, de résoudre les problèmes qui viennent d'être évoqués sans utiliser de générateur diesel, et de manière simple et peu coûteuse.

### RESUME DE L'INVENTION

En vue de la réalisation de ce but, on propose un circuit électrique agencé pour être connecté à au moins un panneau photovoltaïque, à au moins une batterie principale et à un régulateur de charge, et comprenant :
- un premier composant d'alimentation agencé pour, à intervalles prédéfinis, générer une première tension à partir d'une énergie photovoltaïque qui est produite par le au moins un panneau photovoltaïque ;
- un module de commutation agencé pour, lorsque le premier composant d'alimentation génère la première tension, être alimenté par ladite première tension et appliquer, aux bornes de la au moins une batterie principale et du régulateur de charge, pendant une durée prédéfinie, une tension d'alimentation produite à partir de l'énergie photovoltaïque.

A intervalles prédéfinis, la tension d'alimentation est donc appliquée automatiquement et pendant une durée prédéfinie en entrée du régulateur de charge et des batteries principales.

Cela permet au régulateur de charge de charger ses condensateurs de sortie sans demander aux batteries principales un courant de crête élevé. Lorsqu'une batterie principale est complètement déchargée, la tension d'alimentation permet de la reconnecter automatiquement.

Les deux problèmes évoqués plus tôt, survenant lors du remplacement des batteries au plomb par des batteries au lithium, sont donc résolus.

La solution proposée ne nécessite pas d'intervention sur place d'un opérateur muni d'un générateur diesel, puisque le circuit électrique utilise pour son alimentation uniquement l'énergie photovoltaïque.

La solution est très simple à mettre en œuvre, puisqu'il suffit de connecter le circuit électrique aux panneaux photovoltaïques, aux batteries et au régulateur de charge.

Le circuit électrique produit la tension d'alimentation de manière automatique. Il fonctionne de manière autonome : il n'a pas besoin d'être piloté ou alimenté par un autre circuit.

Le circuit électrique comprend très peu de composants, et ces composants sont des composants très simples (pas de microcontrôleur, processeur, etc.), de sorte que le circuit électrique est très peu coûteux.

L'invention facilite donc grandement l'introduction de batteries au lithium dans les applications telles que celle décrite plus haut.

On propose de plus un circuit électrique tel que précédemment décrit, le premier composant d'alimentation étant alimenté par une tension d'entrée produite par le au moins un panneau photovoltaïque, le premier composant d'alimentation étant agencé pour générer la première tension lorsque la tension d'entrée est supérieure à une tension de seuil minimum du premier composant d'alimentation.

On propose de plus un circuit électrique tel que précédemment décrit, dans lequel le module de commutation comporte :
- un deuxième composant d'alimentation agencé pour être alimenté par la première tension et pour produire une deuxième tension ;
- un relais temporisé comprenant un interrupteur et agencé pour être alimenté par la deuxième tension et pour, lorsque la deuxième tension passe d'une valeur nulle à une valeur non nulle, fermer l'interrupteur pendant la durée prédéfinie pour appliquer la tension d'alimentation aux bornes de la au moins une batterie principale et du régulateur de charge, puis rouvrir l'interrupteur suite à la durée prédéfinie.

On propose de plus un circuit électrique tel que précédemment décrit, la tension d'alimentation étant la première tension.

On propose de plus un circuit électrique tel que précédemment décrit, comportant en outre une batterie secondaire et un troisième composant d'alimentation, la batterie secondaire étant agencée pour être chargée par le premier composant d'alimentation et donc par l'énergie photovoltaïque, l'interrupteur du relais temporisé étant monté entre la batterie secondaire et le troisième composant d'alimentation, le troisième composant d'alimentation étant agencé pour être alimenté par une tension secondaire aux bornes de la batterie secondaire lorsque l'interrupteur est fermé, le troisième composant d'alimentation étant alors agencé pour produire une troisième tension qui est la tension d'alimentation.

On propose de plus un équipement comprenant un boîtier et un circuit électrique tel que précédemment décrit, le circuit électrique étant positionné dans le boîtier.

On propose de plus un dispositif d'alimentation comportant au moins une batterie principale, un régulateur de charge, et un circuit électrique tel que précédemment décrit.

On propose de plus un dispositif d'alimentation tel que précédemment décrit, la au moins une batterie principale étant une batterie au lithium.

On propose de plus un procédé de remplacement d'au moins une batterie d'origine positionnée dans une armoire, dans laquelle est positionné aussi un régulateur de charge et qui est connectée à au moins un panneau photovoltaïque, comprenant les étapes de :
- retirer de l'armoire la au moins une batterie d'origine ;
- remplacer la au moins une batterie d'origine par au moins une batterie principale ;
- intégrer dans l'armoire le circuit électrique tel que précédemment décrit, en connectant le circuit électrique au au moins un panneau photovoltaïque, à la au moins une batterie principale et au régulateur de charge.

On propose de plus un procédé de remplacement tel que précédemment décrit, dans lequel la au moins une batterie d'origine est une batterie au plomb et la au moins une batterie principale est une batteries au lithium.

On propose de plus un procédé d'alimentation, mis en œuvre dans le circuit électrique tel que précédemment décrit, et comprenant les étapes de :
- désexciter une bobine du relais temporisé ;
- si la tension d'entrée est supérieure à la tension de seuil minimum du premier composant d'alimentation, exciter la bobine et fermer ainsi l'interrupteur du relais temporisé ;
- appliquer la tension d'alimentation aux bornes de la au moins une batterie principale et du régulateur de charge ;
- faire compter la durée prédéfinie par un composant de temporisation ;
- lorsque le composant de temporisation a compté la durée prédéfinie, ouvrir l'interrupteur du relais temporisé.

L'invention sera mieux comprise à la lumière de la description qui suit de modes de mise en œuvre particuliers non limitatifs de l'invention.

### BREVE DESCRIPTION DES DESSINS

Il sera fait référence aux dessins annexés parmi lesquels :
[Fig. 1] la figure 1 représente un panneau photovoltaïque, une tour de télécommunication et un dispositif d'alimentation de l'art antérieur ;
[Fig. 2] la figure 2 est une figure similaire à la figure 1, avec un circuit électrique selon un premier mode de réalisation intégré dans le dispositif d'alimentation ; [Fig. 3] la figure 3 représente le circuit électrique selon le premier mode de réalisation ;
[Fig. 4] la figure 4 représente à nouveau le circuit électrique selon le premier mode de réalisation, connecté aux panneaux photovoltaïques, au régulateur de charge et à la tour de télécommunication ;
[Fig. 5] la figure 5 représente un organigramme de contrôle du circuit électrique ;
[Fig. 6] la figure 6 représente le circuit électrique selon un deuxième mode de réalisation.

### DESCRIPTION DETAILLEE DE L'INVENTION

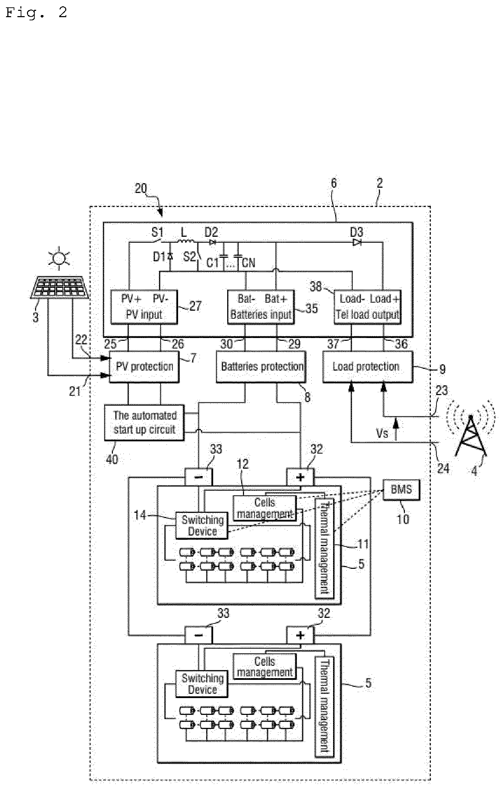

En référence à la figure 2, l'invention est ici mise en œuvre dans un dispositif d'alimentation 20.

Les éléments de la figure 2, qui sont identiques à ceux de la figure 1, gardent leur référence.

Le dispositif d'alimentation 20 est connecté à au moins un panneau photovoltaïque 3 (en l'occurrence à plusieurs), et à au moins un système client, en l'occurrence à une tour de télécommunication 4. Le dispositif d'alimentation 20 alimente le au moins un système client, c'est-à-dire ici la tour de télécommunication 4.

Le dispositif d'alimentation 20 intègre un régulateur de charge 6, ici de type MPPT, et au moins une batterie principale 5 (en l'occurrence plusieurs), qui sont des batteries au lithium, ici de type LiFePO4.

Le dispositif d'alimentation 20 est intégré dans une armoire 2, qui comprend ici une première entrée 21, une deuxième entrée 22, une première sortie 23 et une deuxième sortie 24.

La première entrée 21 et la deuxième entrée 22 sont connectées à deux ports du système formé par les panneaux photovoltaïques 3 (qui sont connectés entre eux). La première entrée 21 est une entrée positive et la deuxième entrée 22 est une entrée négative.

La première sortie 23 et la deuxième sortie 24 sont reliées à la tour de télécommunication 4. La première sortie 23 est une sortie positive et la deuxième sortie 24 est une sortie négative. Le dispositif d'alimentation 20 fournit à la tour de télécommunication 4 un courant de sortie pour l'alimenter, sous une tension de sortie Vs appliquée entre la première sortie 23 et la deuxième sortie 24.

Le régulateur de charge 6 comporte tout d'abord une première entrée 25 et une deuxième entrée 26.

La première entrée 21 et la deuxième entrée 22 du dispositif d'alimentation 20 sont connectées respectivement, via les premiers composants de protection 7, à la première entrée 25 et à la deuxième entrée 26 du régulateur de charge 6. La première entrée 25 est une entrée positive et la deuxième entrée 26 est une entrée négative.

La première entrée 25 et la deuxième entrée 26 sont elles-mêmes connectées à un premier module d'entrée 27 du régulateur de charge 6, via lequel celui-ci acquiert donc le courant produit par les panneaux photovoltaïques 3.

Le régulateur de charge 6 comprend de plus une troisième entrée 29 et une quatrième entrée 30 qui sont connectées, via les deuxièmes composants de protection 8, aux bornes des batteries principales 5. La troisième entrée 29 est une entrée positive et la quatrième entrée 30 est une entrée négative.

La troisième entrée 29 est connectée, via les deuxièmes composants de protection 8, à la borne positive 32 de chaque batterie principale 5. Les batteries principales 5 sont montées en parallèle : les bornes positives 32 des batteries 5 sont connectées entre elles, et les bornes négatives 33 des batteries 5 sont connectées entre elles. La quatrième entrée 30 est connectée, via les deuxièmes composants de protection 8, à la borne négative 33 de chaque batterie 5.

La troisième entrée 29 et la quatrième entrée 30 sont elles-mêmes connectées à un deuxième module d'entrée 35 du régulateur de charge 6, via lequel celui-ci acquiert donc le courant produit par les batteries 5.

Le régulateur de charge 6 comprend de plus une première sortie 36 et une deuxième sortie 37 qui sont respectivement connectées, via les troisièmes composants de protection 9, à la première sortie 23 et à la deuxième sortie 24 de l'armoire 2. La première sortie 36 est une sortie positive et la deuxième sortie 37 est une sortie négative.

La première sortie 36 et la deuxième sortie 37 sont elles-mêmes connectées à un module de sortie 38 du régulateur de charge 6.

Le régulateur de charge 6 comprend un premier interrupteur S1, une première diode D1, une inductance L, un deuxième interrupteur S2, une deuxième diode D2, les condensateurs de sortie C1...CN et une troisième diode D3.

Le premier interrupteur S1, l'inductance L, la deuxième diode D2 et la troisième diode D3 sont montés en série.

La première diode D1, le deuxième interrupteur S2 et les condensateurs de sortie C1...CN sont montés parallèlement les uns avec les autres.

Le premier interrupteur S1 a une borne connectée à la première entrée 25 via le premier module d'entrée 27. L'anode de la première diode D1 est connectée à la deuxième entrée 26 via le premier module d'entrée 27.

Les bornes des condensateurs de sortie C1...CN sont connectées à la troisième entrée 29 et à la quatrième entrée 30 via le deuxième module d'entrée 35. La cathode de la troisième diode D3 et les bornes négatives des condensateurs de sortie sont respectivement connectées à la première sortie 36 et à la deuxième sortie 37 via le module de sortie 38.

On s'intéresse maintenant à la mise en œuvre de l'invention.

On a intégré dans le dispositif d'alimentation les batteries au lithium (ici LiFePO4), c'est-à-dire les batteries principales 5, à la place des batteries plomb. On est donc confronté aux deux problèmes qui ont été décrits plus tôt : courant d'appel élevé demandé par le régulateur de charge 6 à la mise en service, et déconnexion par le BMS 10 d'une batterie déchargée 5.

Pour pallier ces problèmes, on intègre dans le dispositif d'alimentation 20, et donc dans l'armoire 2, un circuit électrique 40.

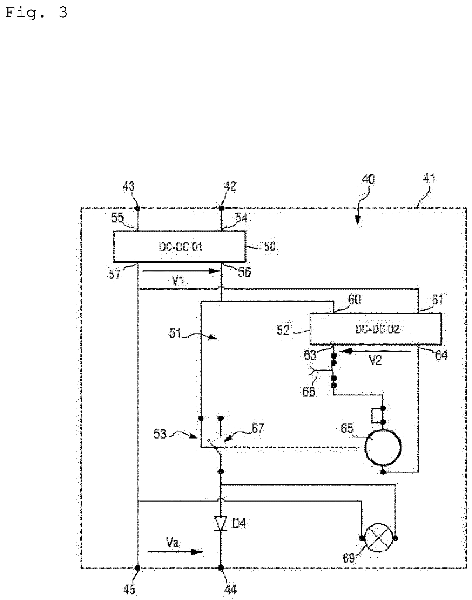

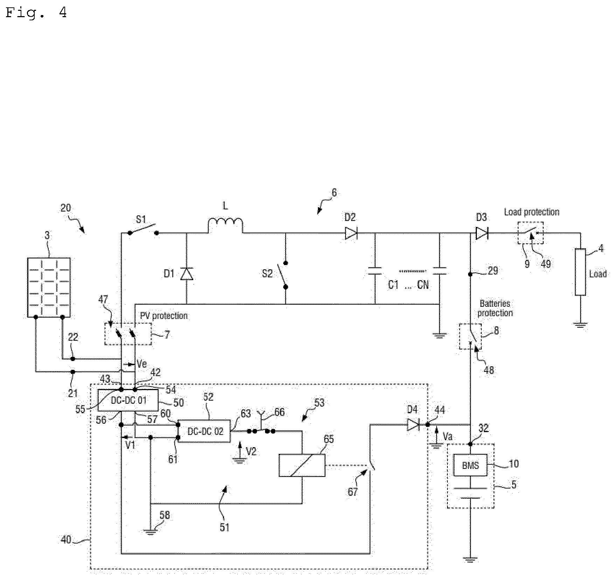

On décrit tout d'abord un premier mode de réalisation du circuit électrique. Ce premier mode de réalisation est visible sur les figures 3 et 4.

Le circuit électrique 40 est ici intégré dans le boîtier 41 d'un petit équipement que l'on vient positionner et connecter dans l'armoire 2. Cet équipement comporte des connecteurs permettant de connecter le circuit électrique 40 aux panneaux photovoltaïques 3 (en tout cas, à au moins un panneau photovoltaïque 3), aux batteries 5 et au régulateur de charge 6.

Le circuit électrique 40 comporte une première entrée 42 (entrée positive), une deuxième entrée 43 (entrée négative), une première sortie 44 (sortie positive) et une deuxième sortie 45 (sortie négative).

Lorsque le circuit électrique 40 est intégré dans le dispositif d'alimentation 20, la première entrée 42 est connectée à la première entrée 21 de l'armoire 2, et la deuxième entrée 43 est connectée à la deuxième entrée 22 de l'armoire 2. La première entrée 42 et la deuxième entrée 43 du circuit électrique 40 sont donc connectées aux panneaux photovoltaïques 3.

On note sur la figure 4 que les premiers composants de protection 7 comprennent des fusibles 47.

La première sortie 44 du circuit électrique 40 est connectée à la borne positive 32 des batteries 5, et donc, via les deuxièmes composants de protection 8 (comprenant un disjoncteur 48 pour protéger les batteries 5), à la troisième entrée 29 du régulateur de charge 6. La deuxième sortie 45 du circuit électrique 40 est connectée à la borne négative 33 des batteries 5, et donc, via les deuxièmes composants de protection 8, à la quatrième entrée 30 du régulateur de charge 6. On note que la deuxième sortie 45 du circuit électrique peut être connectée à une masse électrique du dispositif d'alimentation 20, qui est elle-même connectée aux bornes négatives 33 des batteries 5.

On note sur la figure 4 que les troisièmes composants de protection 9 comprennent un disjoncteur 49 pour protéger la tour de télécommunication 4.

Le circuit électrique 40 comporte un premier composant d'alimentation 50 et un module de commutation 51.

Le module de commutation 51 comprend un deuxième composant d'alimentation 52 et un relais temporisé 53 (relais de puissance).

Le circuit électrique 40 comprend aussi une diode de sortie D4.

Le premier composant d'alimentation 50 et le deuxième composant d'alimentation 52 sont des convertisseurs DC/DC (ils produisent une tension continue à partie d'une tension continue).

Le premier composant d'alimentation 50 a une première entrée 54 (entrée positive) connectée à la première entrée 42 du circuit électrique 40, et une deuxième entrée 55 (entrée négative) connectée à la deuxième entrée 43 du circuit électrique 40. Le premier composant d'alimentation 50 a une première sortie 56 (sortie positive) et une deuxième sortie 57 (sortie négative). La deuxième sortie 57 est connectée à une masse électrique 58 du circuit électrique 40 (elle-même connectée à une masse électrique du dispositif d'alimentation 20).

Le deuxième composant d'alimentation 52 a une première entrée 60 (entrée positive) connectée à la première sortie 56 du premier composant d'alimentation 50, et une deuxième entrée 61 (entrée négative) connectée à la deuxième sortie 57 du premier composant d'alimentation 50 (et donc à la masse électrique 58). Le deuxième composant d'alimentation 52 a une première sortie 63 (sortie positive), et une deuxième sortie 64 (entrée négative).

Le relais temporisé 53 comprend une bobine 65, un composant de temporisation 66, et un interrupteur 67.

La bobine 65 comprend une première borne connectée à la première sortie 63 du deuxième composant d'alimentation 52 et une deuxième borne connectée à la masse électrique 58. L'interrupteur 67 comprend une première borne connectée à la première sortie 56 du premier composant d'alimentation 50 et une deuxième borne connectée à l'anode de la diode de sortie D4.

La cathode de la diode de sortie D4 est connectée à la troisième entrée 29 du régulateur de charge 6 via les deuxième composants de protection 8 et à la borne positive 32 de chaque batteries 5 (et donc au BMS 10 de chaque batterie 5).

Une lampe de signalisation 69 est connectée entre la deuxième sortie 57 du premier composant d'alimentation 50 et la borne de l'interrupteur 67 qui est connectée à l'anode de la diode D4.

On décrit maintenant le fonctionnement du circuit électrique 40.

Le premier composant d'alimentation 50 est agencé pour, à intervalles prédéfinis, générer une première tension V1 à partir d'une énergie photovoltaïque qui est produite par les panneaux photovoltaïques 3.

Le module de commutation 51 est agencé pour, lorsque le premier composant d'alimentation 50 génère la première tension V1, être alimenté par ladite première tension V1 et appliquer, aux bornes des batteries principales 5 (bornes 32 et 33) et du régulateur de charge 6 (entrées 29 et 30), pendant une durée prédéfinie, une tension d'alimentation Va produite à partir de l'énergie photovoltaïque.

La tension d'entrée Ve, produite par les panneaux photovoltaïques 3, alimente le premier composant d'alimentation 50.

Lorsque la tension d'entrée Ve en entrée du premier composant d'alimentation 50 est inférieure à la tension de seuil minimum du premier composant d'alimentation 50, la tension de sortie du premier composant d'alimentation est nulle.

Lorsque la tension d'entrée Ve est supérieure (en l'occurrence supérieure ou égale) à la tension de seuil minimum du premier composant d'alimentation 50, le premier composant d'alimentation 50 produit la première tension V1 à partir de l'énergie photovoltaïque produite par les panneaux photovoltaïques 3.

La première tension V1 est une tension constante et connue, qui dépend de la conception du premier composant d'alimentation 50 lui-même.

Lorsque le premier composant d'alimentation 50 produit la première tension V1, celle-ci alimente le module de commutation 51, et donc le deuxième composant d'alimentation 52.

Le deuxième composant d'alimentation 52 produit alors la deuxième tension V2 (qui est aussi constante et connue). La deuxième tension V2 alimente le relais temporisé 53. La bobine 65 du relais temporisé 53 est activée et, pendant une durée prédéfinie, ferme l'interrupteur 67.

Cette durée prédéfinie, égale par exemple à 30 secondes, est définie par un réglage du relais temporisé 53, qui est réalisé par exemple en usine.

Ainsi, pendant la durée prédéfinie, la première tension V1, qui est la tension d'alimentation Va, est appliquée à la fois en entrée du régulateur de charge 6 et aux bornes de ses condensateurs de sortie C1...CN, mais aussi en entrée des batteries principales 5 et des BMS 10.

Lorsque la tension d'alimentation Va est appliquée, la lampe de signalisation 69 est allumée.

A l'issue de la durée prédéfinie, la bobine 65 est désactivée, l'interrupteur 67 est ouvert, et la tension d'alimentation Va (c'est-à-dire la première tension V1) n'est plus appliquée.

Ainsi, lors de la première mise en service du dispositif d'alimentation 20 avec les batteries 5 (au lithium), les panneaux photovoltaïques 3 alimentent le premier composant d'alimentation 50, et, par conséquent, le deuxième composant d'alimentation 52 est alimenté, et la bobine 65 du relais temporisé 53 est activée.

Le relais temporisé 53 utilise la puissance disponible de sortie du premier composant d'alimentation 50 (le courant circule via l'interrupteur 67) pour charger progressivement les condensateurs de sortie C1...CN du régulateur de charge 6. De cette façon, le courant de crête, susceptible d'endommager le circuit BMS 10 des batteries 5, est éliminé. Après avoir compté le temps *"On Delay"* (c'est-à-dire la durée prédéfinie, ici égale à 30 secondes), le relais temporisé 53 déconnecte le circuit électrique 40 (l'interrupteur 67 prend la position OFF, c'est-à-dire qu'il est ouvert) du reste du dispositif d'alimentation 20, qui peut donc être démarré correctement.

Dans le cas du deuxième problème, si une batterie principale 5 est complètement déchargée (ou plusieurs batteries 5), le circuit électrique 40, de manière automatique à nouveau, utilisera l'énergie photovoltaïque disponible pour activer le BMS 10 (car il connectera les panneaux PV 3 aux batteries 5 via le premier composant d'alimentation 50).

Dans un premier temps, le premier composant d'alimentation 50 va alimenter la bobine 65 du relais temporisé 53 (via le deuxième composant d'alimentation 52), et commencer à charger la batterie 5 pendant le temps "On *Delay"* du relais temporisé 53. Passé ce laps de temps, le circuit électrique 40 sera déconnecté du reste du dispositif d'alimentation 20 (l'interrupteur 67 prend la position OFF) et la batterie 5 commence à être correctement chargée par le régulateur de charge 6. De cette façon une longue période de *"Blackout"* sera évitée.

Le fonctionnement du circuit électrique 40 est complètement automatique. Le circuit électrique 40 ne nécessite pas de composant « complexe » pour piloter son fonctionnement (et pas de *software*)*.* Le circuit électrique 40 fonctionne de manière autonome. Le circuit électrique 40 est alimenté uniquement par l'énergie photovoltaïque, qui lui permet de fournir la tension d'alimentation Va, automatiquement, à intervalles prédéfinis et pendant la durée prédéfinie, aux condensateurs de sortie C1...CN et au BMS 10 de chaque batterie 5.

La tension d'alimentation Va est appliquée par le circuit électrique 40 de manière automatique, à intervalles prédéfinis et pendant la durée prédéfinie.

Les intervalles prédéfinis sont donc ici des intervalles quotidiens. La nuit, la tension d'entrée Ve produite par les panneaux photovoltaïques 3 est nulle, et donc inférieur à la tension de seuil minimum du premier composant d'alimentation 50, et donc la tension de sortie du premier composant d'alimentation 50 est nulle. La tension d'alimentation Va est nulle (et l'interrupteur 67 est ouvert) .

Chaque matin, lorsque la tension d'entrée Ve devient supérieure ou égale à la tension de seuil minimum du premier composant d'alimentation 50, celui-ci produit la première tension V1. Le deuxième composant d'alimentation 52 est alimenté et produit la deuxième tension V2. La bobine 65 est alors activée. La tension d'alimentation Va, égale à la première tension V1, est alors appliquée en entrée des batteries 5 et du régulateur de charge 6 pendant la durée prédéfinie (égale ici à 30 secondes).

Suite à la durée prédéfinie, le premier composant d'alimentation 50 continue à produire la première tension (jusqu'à la fin du jour), mais la bobine 65 du relais temporisé 53 est désactivée, l'interrupteur 67 est ouvert, et le circuit électrique 40 est déconnecté du reste du dispositif d'alimentation 20.

Cette opération est réalisée chaque matin de chaque jour, ce qui règle à la fois le problème du courant de crête au premier fonctionnement du dispositif d'alimentation 20, mais aussi la reconnexion des batteries principales 5 au reste du dispositif d'alimentation 20 lorsqu'elles ont été complètement déchargées. On note que les intervalles prédéfinis sont ici quotidiens mais peuvent être de durée différente, car leur durée dépend de l'heure à laquelle la tension d'entrée Ve dépasse le seuil prédéfini (et donc dépend de l'ensoleillement chaque matin).

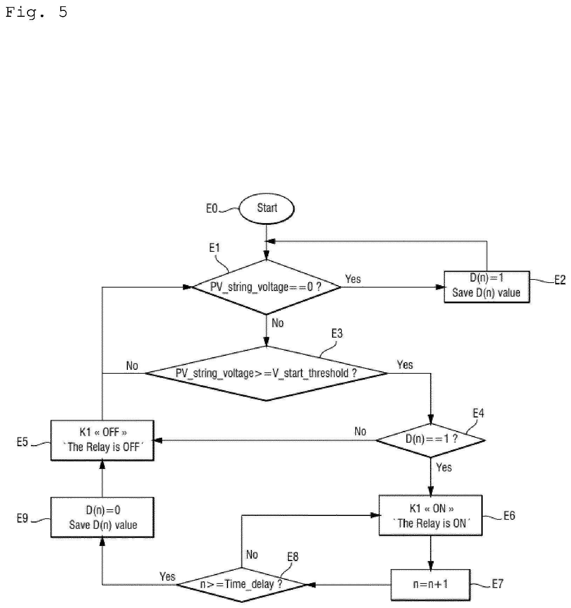

On décrit, en référence à la figure 5, les différentes étapes du procédé correspondant au séquencement automatique des actions réalisées par le circuit électrique 40.

On utilise pour décrire ce séquencement les variables suivantes :
- PV_string_voltage, qui est la valeur de la tension d'entrée Ve ;
- n, qui représente le temps, c'est-à-dire l'instant courant ;
- D(n), qui indique l'état de la bobine 65 au temps n. D = 1 indique que la bobine 65 du relais 53 est initialisée et peut entrer dans un nouveau cycle de comptage ;
- K1, qui indique l'état de l'interrupteur 67.

Le procédé commence par une étape de démarrage E0.

Au temps n, si la tension d'entrée (PV_string_voltage) est égale à zéro (étape E1), la bobine 65 du relais temporisé 53 est désexcitée et revient à son état initial : étape E2. La valeur 1 est conférée à la variable D(n).

Le procédé repasse à l'étape E1.

A l'étape E1, si la tension d'entrée n'est pas nulle, une deuxième condition doit être vérifiée pour activer le relais temporisé 53 : la tension d'entrée Ve doit être supérieure (ici supérieure ou égale) à la tension de seuil minimum (V_start_threshold) du premier composant d'alimentation 50 : étape E3. Tant que ce n'est pas le cas, le procédé reboucle sur l'étape E1 (puis à nouveau E3).

A l'étape E3, lorsque la tension d'entrée Ve est supérieure ou égale à la tension de seuil minimum, le relais 53 peut être activé à condition que la variable D(n) soit égale à 1 : étape E4.

Si ce n'est pas le cas, l'interrupteur 67 reste en position ouverte (état OFF - bloqué) : étape E5. Le procédé repasse à l'étape E1.

Si la variable D(n) est égale à 1, l'interrupteur 67 est fermé (état ON - passant) : étape E6.

L'ensemble de panneaux photovoltaïques 3 commence à charger les condensateurs de sortie C1...CN du régulateur de charge 6 et les batteries 5 (via le premier composant d'alimentation 50). Le dispositif d'alimentation 20 peut alors démarrer correctement. Le régulateur de charge 6 alimente la tour de communication 4.

Le composant de temporisation 66 commence à compter le *Time*_*delay* Td, c'est-à-dire la durée prédéfinie (égale à 30 secondes par exemple). La variable n est incrémentée : étape E7.

Le procédé passe à l'étape E8.

Tant que le temps n est inférieur strictement à la durée prédéfinie, le procédé reboucle sur l'étape E6 ; l'interrupteur 67 reste fermé.

Lorsque le temps n devient supérieur ou égal à la durée prédéfinie, et donc lorsque le composant de temporisation 66 a compté la durée prédéfinie, la valeur de la variable D(n) passe à 0 : étape E9.

L'interrupteur 67 du relais temporisé 53 s'ouvre (état OFF - bloqué) : étape E5.

Le procédé repasse à l'étape E1.

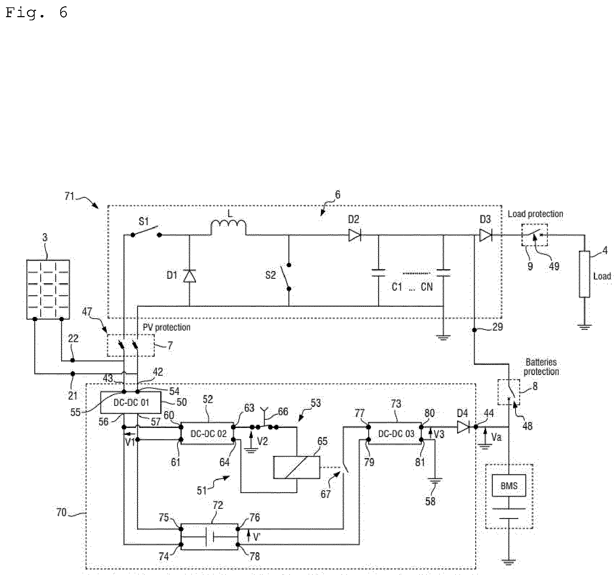

On décrit maintenant, en référence à la figure 6, un circuit électrique 70 selon un deuxième mode de réalisation, qui est intégré dans un dispositif d'alimentation 71.

Le circuit électrique 70 comporte à nouveau un premier composant d'alimentation 50, un module de commutation 51 comprenant un deuxième composant d'alimentation 52 et un relais temporisé 53, et une diode de sortie D4.

Le circuit électrique 70 comporte de plus une batterie secondaire 72 et un troisième composant d'alimentation 73 qui est un convertisseur DC/DC.

Le premier composant d'alimentation 50 a une première entrée 54 (entrée positive) connectée à la première entrée 42 du circuit électrique 70, et une deuxième entrée 55 (entrée négative) connectée à la deuxième entrée 43 du circuit électrique 70. Le premier composant d'alimentation 50 a une première sortie 56 (sortie positive) et une deuxième sortie 57 (sortie négative).

Le deuxième composant d'alimentation 52 a une première entrée 60 (entrée positive) connectée à la première sortie 56 du premier composant d'alimentation 50, et une deuxième entrée 61 (entrée négative) connectée à la deuxième sortie 57 du premier composant d'alimentation 50. Le deuxième composant d'alimentation 52 a une première sortie 63 (sortie positive), et une deuxième sortie 64 (entrée négative).

Le relais temporisé 53 comprend une bobine 65, un composant de temporisation 66, et un interrupteur 67.

La bobine 65 comprend une première borne connectée à la première sortie 63 du deuxième composant d'alimentation 52 et une deuxième borne connectée à la deuxième sortie 64 du deuxième composant d'alimentation 52.

La batterie secondaire 72 comprend une première borne d'entrée 74 (positive) connectée à la première sortie 56 du premier composant d'alimentation 50 et une deuxième borne d'entrée 75 (négative) connectée à la deuxième sortie 57 du premier composant d'alimentation 50.

La batterie secondaire 72 comprend une première borne de sortie 76 (positive) connectée à une première borne de l'interrupteur 67. La deuxième borne de l'interrupteur 67 est connectée à une première entrée 77 (positive) du troisième composant d'alimentation 73.

La batterie secondaire 72 comprend une deuxièmes borne de sortie 78 (négative) connectée à une deuxième borne d'entrée 79 du troisième composant d'alimentation 72.

Le troisième composant d'alimentation 73 comprend une première sortie 80 (positive) connectée à l'anode de la diode de sortie D4, et une deuxième sortie 81 (négative) connectée à la masse électrique 58.

La cathode de la diode de sortie D4 est connectée à la première sortie 44 du circuit électrique 70, et donc à la troisième entrée 29 du régulateur de charge 6 via les deuxième composants de protection 8 et à la borne positive 32 de chaque batteries 5 (et donc au BMS 10 de chaque batterie 5).

A nouveau, le circuit électrique 70 est alimenté par la tension d'entrée Ve produite par les panneaux photovoltaïques 3.

Le premier composant d'alimentation 50, à intervalles prédéfinis, génère la première tension V1 à partir de l'énergie photovoltaïque qui est produite par les panneaux photovoltaïque 3. Lorsque le premier composant d'alimentation 50 génère la première tension V1, le module de commutation est alimenté par la première tension V1 et applique, aux bornes des batteries principales 5 (bornes 32 et 33) et du régulateur de charge 6 (entrées 29 et 30), pendant la durée prédéfinie, une tension d'alimentation Va produite à partir de l'énergie photovoltaïque.

Le premier composant d'alimentation 50 génère la première tension V1 lorsque la tension d'entrée Ve est supérieure (ou égale) à la tension de seuil minimum du premier composant d'alimentation 50. La première tension alimente le deuxième composant d'alimentation 52. La bobine 65 est activée et l'interrupteur 67 est passant pendant la durée prédéfinie.

Le fonctionnement automatique du circuit électrique 70 est donc séquencé de la même manière que le circuit électrique 40.

Cependant, cette fois, la tension d'alimentation Va n'est pas la première tension V1 produite par le premier composant d'alimentation 50.

La tension d'alimentation Va est une troisième tension V3 (constante et connue) produite par le troisième composant d'alimentation 73 lorsque celui-ci est alimenté par une tension secondaire V' aux bornes de la batterie secondaire 72.

La batterie secondaire 72 est chargée par le premier composant d'alimentation 50, et donc par l'énergie photovoltaïque, lorsque le premier composant d'alimentation 50 produit la première tension V1, c'est-à-dire lorsque la tension d'entrée Ve est supérieure ou égale à la tension de seuil minimum du premier composant d'alimentation 50.

La tension secondaire V' alimente le troisième composant d'alimentation 73 lorsque l'interrupteur 67 est fermé (état ON - passant).

Cette solution est avantageuse pour la raison suivante. La batterie secondaire 72 est rechargée de manière continue par les panneaux photovoltaïques 3 (lorsque l'ensoleillement est suffisant pour que la tension d'entrée Ve soit supérieure ou égale à la tension de seuil minimum), et contient donc en permanence une certaine quantité d'énergie.

On assure ainsi, le matin, lorsque l'interrupteur 67 est fermé pendant la durée prédéfinie, et que la journée est peu ensoleillée, que la quantité d'énergie que peut fournir le circuit électrique 70 est suffisante pour charger les condensateurs de sortie C1...CN du régulateur de charge 6 et pour activer le BMS 10.

On décrit maintenant la manière dont sont remplacées au moins une batterie d'origine (en l'occurrence plusieurs) par au moins une batterie principale 5 (en l'occurrence plusieurs), dans une armoire 2 existante qui est déjà connectée aux panneaux photovoltaïques 3 et à la tour de télécommunication 4.

Les batteries d'origine ainsi qu'un régulateur de charge 6 sont positionnés dans l'armoire 2.

Les batteries d'origine sont des batteries au plomb.

Les nouvelles batteries (batteries principales 5) sont des batteries au lithium.

On retire tout d'abord de l'armoire 2 les batteries d'origine.

Puis, on remplace les batteries d'origine par les batteries principales 5.

On intègre ensuite dans l'armoire l'équipement comprenant le circuit électrique 40, 70, et donc le circuit électrique 40, 70, en connectant le circuit électrique aux panneaux photovoltaïques 3, aux batteries principales 5 et au régulateur de charge 6.

Le dispositif d'alimentation peut ainsi démarrer normalement et alimenter la tour de télécommunication 4.

On assure ainsi un fonctionnement du dispositif d'alimentation sans rencontrer les problèmes précédemment évoqués.

Bien sûr, le circuit électrique pourrait aussi être intégré dans le dispositif d'alimentation dès la fabrication de celui-ci.

Bien entendu, l'invention n'est pas limitée aux modes de réalisation décrits mais englobe toute variante entrant dans le champ de l'invention tel que défini par les revendications.

On a indiqué ici que le dispositif d'alimentation est destiné à alimenter une tour de télécommunication mais, plus généralement, il est destiné à alimenter au moins un système client quelconque. Il pourrait s'agir d'une ou de plusieurs installations électriques quelconques, et par exemple d'un dispensaire, d'une ou de plusieurs habitations, etc.

Les modes de réalisation décrits ici ne sont aucunement limitatifs.

En particulier, le module de commutation pourrait être différent de celui décrit ici. On pourrait ainsi avoir un interrupteur et un compteur qui compte la durée prédéfinie et qui actionne l'interrupteur (à la place d'un relais « intégré »). Le deuxième composant d'alimentation n'est pas obligatoire.

La tension d'alimentation pourrait être produite de manière différente et par exemple, dans le premier mode de réalisation, par un quatrième composant d'alimentation alimenté par le premier composant d'alimentation.

## Revendications

1. Circuit électrique (40 ; 70) agencé pour être connecté à au moins un panneau photovoltaïque (3), à au moins une batterie principale (5) et à un régulateur de charge (6), et comprenant :
- un premier composant d'alimentation (50) agencé pour, à intervalles prédéfinis, générer une première tension (V1) à partir d'une énergie photovoltaïque qui est produite par le au moins un panneau photovoltaïque (3) ;
- un module de commutation (51) agencé pour, lorsque le premier composant d'alimentation (50) génère la première tension (V1), être alimenté par ladite première tension et appliquer, aux bornes de la au moins une batterie principale et du régulateur de charge, pendant une durée prédéfinie, une tension d'alimentation (Va) produite à partir de l'énergie photovoltaïque.

2. Circuit électrique selon la revendication 1, le premier composant d'alimentation (50) étant alimenté par une tension d'entrée (Ve) produite par le au moins un panneau photovoltaïque (3), le premier composant d'alimentation étant agencé pour générer la première tension (V1) lorsque la tension d'entrée (Ve) est supérieure à une tension de seuil minimum du premier composant d'alimentation.

3. Circuit électrique selon l'une des revendications précédentes, dans lequel le module de commutation comporte :
- un deuxième composant d'alimentation (52) agencé pour être alimenté par la première tension (V1) et pour produire une deuxième tension (V2) ;
- un relais temporisé (53) comprenant un interrupteur (67) et agencé pour être alimenté par la deuxième tension (V2) et pour, lorsque la deuxième tension (V2) passe d'une valeur nulle à une valeur non nulle, fermer l'interrupteur (67) pendant la durée prédéfinie pour appliquer la tension d'alimentation (Va) aux bornes de la au moins une batterie principale (5) et du régulateur de charge (6), puis rouvrir l'interrupteur suite à la durée prédéfinie.

4. Circuit électrique selon la revendication 3, la tension d'alimentation (Va) étant la première tension (V1).

5. Circuit électrique selon la revendication 3, comportant en outre une batterie secondaire (72) et un troisième composant d'alimentation (73), la batterie secondaire étant agencée pour être chargée par le premier composant d'alimentation (50) et donc par l'énergie photovoltaïque, l'interrupteur (67) du relais temporisé (53) étant monté entre la batterie secondaire et le troisième composant d'alimentation, le troisième composant d'alimentation (73) étant agencé pour être alimenté par une tension secondaire (V') aux bornes de la batterie secondaire (72) lorsque l'interrupteur (67) est fermé, le troisième composant d'alimentation étant alors agencé pour produire une troisième tension (V3) qui est la tension d'alimentation (Va) .

6. Equipement comprenant un boîtier (41) et un circuit électrique (40 ; 70) selon l'une des revendications précédentes, le circuit électrique étant positionné dans le boîtier.

7. Dispositif d'alimentation (20 ; 71) comportant au moins une batterie principale (5), un régulateur de charge (6), et un circuit électrique (40 ; 70) selon l'une des revendications 1 à 5.

8. Dispositif d'alimentation (20 ; 71) selon la revendication 7, la au moins une batterie principale (5) étant une batterie au lithium.

9. Procédé de remplacement d'au moins une batterie d'origine positionnée dans une armoire (2), dans laquelle est positionné aussi un régulateur de charge (6) et qui est connectée à au moins un panneau photovoltaïque (3), comprenant les étapes de :
- retirer de l'armoire la au moins une batterie d'origine ;
- remplacer la au moins une batterie d'origine par au moins une batterie principale (5) ;
- intégrer dans l'armoire le circuit électrique (40 ; 70) selon l'une des revendications 1 à 5, en connectant le circuit électrique au au moins un panneau photovoltaïque (3), à la au moins une batterie principale (5) et au régulateur de charge (6).

10. Procédé selon la revendication 9, dans lequel la au moins une batterie d'origine est une batterie au plomb et la au moins une batterie principale est une batteries au lithium.

11. Procédé d'alimentation, mis en œuvre dans le circuit électrique (40 ; 70) selon les revendications 2 et 3, et comprenant les étapes de :
- désexciter une bobine (65) du relais temporisé (53) ;
- si la tension d'entrée (Ve) est supérieure à la tension de seuil minimum du premier composant d'alimentation (50), exciter la bobine et fermer ainsi l'interrupteur (67) du relais temporisé (53) ;
- appliquer la tension d'alimentation (Va) aux bornes de la au moins une batterie principale (5) et du régulateur de charge (6) ;
- faire compter la durée prédéfinie par un composant de temporisation (66) ;
- lorsque le composant de temporisation (66) a compté la durée prédéfinie, ouvrir l'interrupteur (67) du relais temporisé (53).

## Patentansprüche

1. Elektrischer Stromkreis (40; 70), welcher dafür ausgelegt ist, an zumindest ein Photovoltaik-Paneel (3), an zumindest eine Hauptbatterie (5) und an einen Laderegler (6) angeschlossen zu werden, und welcher Folgendes umfasst:
- eine erste Versorgungskomponente (50), die dafür ausgelegt ist, in vorgegebenen Intervallen aus einer von dem zumindest einen Photovoltaik-Paneel (3) gewonnenen photovoltaischen Energie eine erste Spannung (V1) zu erzeugen;
- ein Schaltmodul (51), das dafür ausgelegt ist, wenn die erste Versorgungskomponente (50) die erste Spannung (V1) erzeugt, mit der ersten Spannung beaufschlagt zu werden und während einer vorgegebenen Zeitdauer eine aus der photovoltaischen Energie erzeugte Versorgungsspannung (Va) an die Klemmen der zumindest einen Hauptbatterie und des Ladereglers anzulegen.

2. Elektrischer Stromkreis nach Anspruch 1, wobei die erste Versorgungskomponente (50) mit einer Eingangsspannung (Ve) beaufschlagt wird, die von dem zumindest einen Photovoltaik-Paneel (3) erzeugt wird, wobei die erste Versorgungskomponente dafür ausgelegt ist, die erste Spannung (V1) zu erzeugen, sobald die Eingangsspannung (Ve) eine Mindest-Schwellenspannung der ersten Versorgungskomponente übersteigt.

3. Elektrischer Stromkreis nach einem der vorhergehenden Ansprüche, wobei das Schaltmodul enthält:
- eine zweite Versorgungskomponente (52), die dafür ausgelegt ist, mit der ersten Spannung (V1) beaufschlagt zu werden und eine zweite Spannung (V2) zu erzeugen;
- ein Zeitrelais (53), das einen Schalter (67) umfasst und dafür ausgelegt ist, mit der zweiten Spannung (V2) beaufschlagt zu werden und, wenn sich die zweite Spannung (V2) von einem Nullwert auf einen Wert ungleich Null verändert, den Schalter (67) während der vorgegebenen Zeitdauer zu schließen, um die Versorgungsspannung (Va) an die Klemmen der zumindest einen Hauptbatterie (5) und des Ladereglers (6) anzulegen, und dann den Schalter nach Ablauf der vorgegebenen Zeitdauer wieder zu öffnen.

4. Elektrischer Stromkreis nach Anspruch 3, wobei es sich bei der Versorgungsspannung (Va) um die erste Spannung (V1) handelt.

5. Elektrischer Stromkreis nach Anspruch 3, ferner enthaltend eine Sekundärbatterie (72) und eine dritte Versorgungskomponente (73), wobei die Sekundärbatterie dafür ausgelegt ist, von der ersten Versorgungskomponente (50) und somit mit der photovoltaischen Energie geladen zu werden, wobei der Schalter (67) des Zeitrelais (53) zwischen der Sekundärbatterie und der dritten Versorgungskomponente geschaltet ist, wobei die dritte Versorgungskomponente (73) dafür ausgelegt ist, an den Klemmen der Sekundärbatterie (72) mit einer Sekundärspannung (V') beaufschlagt zu werden, wenn der Schalter (67) geschlossen ist, wobei die dritte Versorgungskomponente dann dafür ausgelegt ist, eine dritte Spannung (V3) zu erzeugen, welche die Versorgungsspannung (Va) darstellt.

6. Gerät, umfassend ein Gehäuse (41) und einen elektrischen Stromkreis (40; 70) nach einem der vorhergehenden Ansprüche, wobei der elektrische Stromkreis in dem Gehäuse positioniert ist.

7. Stromversorgungsvorrichtung (20; 71), enthaltend zumindest eine Hauptbatterie (5), einen Laderegler (6) und einen elektrischen Stromkreis (40; 70) nach einem der Ansprüche 1 bis 5.

8. Stromversorgungsvorrichtung (20; 71) nach Anspruch 7, wobei es sich bei der zumindest einen Hauptbatterie (5) um eine Lithiumbatterie handelt.

9. Verfahren zum Ersetzen zumindest einer Originalbatterie, die in einem Schrank (2) positioniert ist, in welchem ebenfalls ein Laderegler (6) positioniert ist und welcher an zumindest einem Photovoltaik-Paneel (3) angeschlossen ist, wobei das Verfahren die Schritte umfasst, dass:
- die zumindest eine Originalbatterie aus dem Schrank entnommen wird;
- die zumindest eine Originalbatterie durch zumindest eine Hauptbatterie (5) ersetzt wird;
- der elektrische Stromkreis (40; 70) nach einem der Ansprüche 1 bis 5 in den Schrank eingesetzt wird und dabei der elektrische Stromkreis an das zumindest eine Photovoltaik-Paneel (3), an die zumindest eine Hauptbatterie (5) und an den Laderegler (6) angeschlossen wird.

10. Verfahren nach Anspruch 9, wobei es sich bei der zumindest einen Originalbatterie um eine Bleibatterie und bei der zumindest einen Hauptbatterie um eine Lithiumbatterie handelt.

11. Stromversorgungsverfahren, welches in dem elektrischen Stromkreis (40; 70) nach den Ansprüchen 2 und 3 ausgeführt wird und welches die Schritte umfasst, dass:
- eine Spule (65) des Zeitrelais (53) entregt wird;
- wenn die Eingangsspannung (Ve) die Mindest-Schwellenspannung der ersten Versorgungskomponente (50) übersteigt, die Spule erregt wird und dadurch der Schalter (67) des Zeitrelais (53) geschlossen wird;
- die Versorgungsspannung (Va) an die Klemmen der zumindest einen Hauptbatterie (5) und des Ladereglers (6) angelegt wird;
- das Abzählen der vorgegebenen Zeitdauer mittels einer Zeitkomponente (66) veranlasst wird;
- wenn die Zeitkomponente (66) die vorgegebene Zeitdauer abgezählt hat, der Schalter (67) des Zeitrelais (53) geöffnet wird.

## Claims

1. Electric circuit (40; 70) arranged to be connected to at least one photovoltaic panel (3), to at least one main battery (5) and to a charge regulator (6), and comprising:
. a first power supply component (50) arranged to, at predefined intervals, generate a first voltage (V1) from a photovoltaic energy which is produced by the at least one photovoltaic panel (3);
. a switching module (51) arranged to, when the first power supply component (50) generates the first voltage (V1), be powered by said first voltage and apply, to the terminals of the at least one main battery and of the charge regulator, for a predefined duration, a power supply voltage (Va) produced from the photovoltaic energy.

2. Electric circuit according to claim 1, the first power supply component (50) being powered by an input voltage (Ve) produced by the at least one photovoltaic panel (3), the first power supply component being arranged to generate the first voltage (V1) when the input voltage (Ve) is greater than a minimum threshold voltage of the first power supply component.

3. Electric circuit according to one of the preceding claims, wherein the switching module comprises:
. a second power supply component (52) arranged to be powered by the first voltage (V1) and to produce a second voltage (V2);
. a timer relay (53) comprising a switch (67) and arranged to be powered by the second voltage (V2) and to, when the second voltage (V2) moves from a zero value to a non-zero value, close the switch (67) for the predefined duration to apply the power supply voltage (Va) at the terminals of the at least one main battery (5) and of the charge regulator (6), then reopen the switch following the predefined duration.

4. Electric circuit according to claim 3, the power supply voltage (Va) being the first voltage (V1).

5. Electric circuit according to claim 3, further comprising a secondary battery (72) and a third power supply component (73), the secondary battery being arranged to be charged by the first power supply component (50) and therefore by the photovoltaic energy, the switch (67) of the timer relay (53) being mounted between the secondary battery and the third power supply component, the third power supply component (73) being arranged to be powered by a secondary voltage (V') at the terminals of the secondary battery (72) when the switch (67) is closed, the third power supply component thus being arranged to produce a third voltage (V3) which is the power supply voltage (Va).

6. Equipment comprising a casing (41) and an electric circuit (40; 70) according to one of the preceding claims, the electric circuit being positioned in the casing.

7. Power supply device (20; 71) comprising at least one main battery (5), a charge regulator (6), and an electric circuit (40; 70) according to one of claims 1 to 5.

8. Power supply device (20; 71) according to claim 7, the at least one main battery (5) being a lithium battery.

9. Method for replacing at least one original battery positioned in a cabinet (2), wherein a charge regulator (6) is also positioned, and which is connected to at least one photovoltaic panel (3), comprising the steps of:
. removing the at least one original battery from the cabinet;
. replacing the at least one original battery with at least one main battery (5);
. integrating the electric circuit (40; 70) according to one of claims 1 to 5 in the cabinet, by connecting the electric circuit to the at least one photovoltaic panel (3), to the at least one main battery (5) and to the charge regulator (6).

10. Method according to claim 9, wherein the at least one original battery is a lead battery and the at least one main battery is a lithium battery.

11. Power supply method, implemented in the electric circuit (40; 70) according to claims 2 and 3, and comprising the steps of:
. de-energising a coil (65) of the timer relay (53);
. if the input voltage (Ve) is greater than the minimum threshold voltage of the first power supply component (50), energising the coil and thus closing the switch (67) of the timer relay (53);
. applying the power supply voltage (Va) to the terminals of the at least one main battery (5) and of the charge regulator (6);
. counting the predefined duration by a time delay component (66);
. when the time delay component (66) has counted the predefined duration, opening the switch (67) of the timer relay (53).
